# EUROPÄISCHE PATENTSCHRIFT

(11) **EP 0 930 397 B1**
(45) Veröffentlichungstag und Bekanntmachung des Hinweises auf die Patenterteilung: **07.11.2001**
(21) Anmeldenummer: 98123200.2
(22) Anmeldetag: 05.12.1998
(51) Int. Cl.: D21H 25/06

(54) **Vorrichtung und Verfahren zum Auftragen eines flüssigen oder pastösen Auftragsmediums auf eine laufende Materialbahn, insbesondere aus Papier oder Karton**
Apparatus and process for applying a liquid or pasty medium onto a moving web, in particular of paper or board
Dispositif et procédé pour l'enduction d'une substance liquide ou pâteuse sur une bande en mouvement, particulièrement en papier ou en carton

(30) Priorität: 13.01.1998 DE 19800955
(43) Veröffentlichungstag der Anmeldung: 21.07.1999
(73) Patentinhaber: Voith Paper Patent GmbH, 89522 Heidenheim (DE)
(72) Erfinder: Kohl, Bernhard, 89518 Heidenheim (DE); Kustermann, Martin, Dr., 89522 Heidenheim (DE); Satzger, Oswald, 89537 Giengen (DE); Kurtz, Rüdiger, Dr., 89522 Heidenheim (DE); Hess, Harald, 88287 Grünkraut (DE); Hannen, Karl-Heinz, 86161 Augsburg (DE); Hoffmann, Hans Peter, 85211 Dachau (DE); Kustos, Franz, 47179 Duisburg (DE)

(56) Entgegenhaltungen:
- EP-A- 0 617 167
- US-A- 5 454 870
- DR. HANS W. MAURER: "TAPPI Metered Size Press Forum" WOCHENBLATT FÜR PAPIERFABRIKATION , Bd. 17, 1997, Seiten 827-835, XP002101508

## Beschreibung

Die Erfindung betrifft eine Vorrichtung zum Auftragen eines flüssigen oder pastösen Auftragsmediums auf eine laufende Materialbahn, insbesondere aus Papier oder Karton, wobei ein Auftragswerk das Auftragsmedium zunächst auf ein Auftragselement, bspw. eine Auftragswalze, aufbringt, welches das Auftragsmedium dann an einer Auftragsstelle an die Materialbahn als Auftragsschicht überträgt, oder in einen zwischen der Materialbahn und einem Begrenzungselement, bspw. einer Begrenzungswalze, gebildeten Auftragssumpf einbringt, in welchem das Auftragsmedium sich als Auftragsschicht auf der Materialbahn niederschlägt, wobei gewünschtenfalls an einer in Laufrichtung der Materialbahn hinter der Auftragsstelle angeordneten Rakelstelle eine Rollrakeleinrichtung zum Egalisieren oder/und Dosieren der Auftragsschicht angeordnet ist.

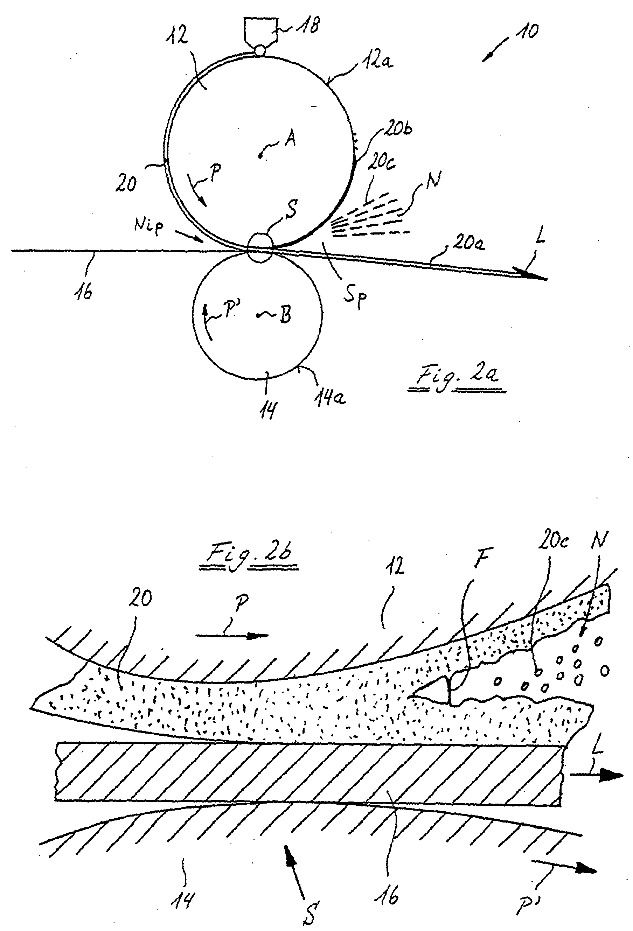

Eine derartige Vorrichtung ist beispielsweise in Fig. 2a dargestellt. Die bekannte Auftragsvorrichtung 10 umfaßt eine Auftragswalze 12 und eine Gegenwalze 14. Die beiden Walzen 12 und 14 bilden zwischen sich einen Auftragsspalt (in der Fachsprache als "Nip" bezeichnet), durch welchen eine sich in Laufrichtung L bewegende Materialbahn 16 hindurch verläuft. Die Auftragswalze 12 wird mittels eines Auftragswerks 18 mit flüssigem oder pastösem Auftragsmedium 20 beschichtet und überträgt dieses im Bereich der Auftragsstelle S an die Materialbahn 16. Die Auftragswalze 12 und die Gegenwalze 14 sind um ihre jeweiligen Achsen A bzw. B in Richtung der Pfeile P bzw. P' gegensinnig drehangetrieben. Derartige Auftragsvorrichtungen werden beispielsweise beim Filmstreichverfahren, Walzenauftragsverfahren, sowie in Leimpressen eingesetzt.

Bei der bekannten Auftragsvorrichtung 10 treten in der Praxis in einem in Laufrichtung L der Materialbahn 16 auf die Auftragsstelle S folgenden Bereich Sp Probleme bei der Trennung der Materialbahn 16 von der Walzenoberfläche 12a auf. Die auf die Walzenoberfläche 12a vordosiert aufgetragene Schicht von Auftragsmedium 20 wird im Auftragsspalt Nip nur zum Teil an die Materialbahn 16 übertragen, da ein Teil 20b des Auftragsmediums 20 an der Walzenoberfläche 12a haften bleibt und mit dieser zum Auftragswerk 18 zurückläuft. Dieser Effekt wird in der Fachsprache als "Filmsplitting" bezeichnet.

Bei diesem Filmsplitting bilden sich zwischen der an die Materialbahn 16 übertragenen Auftragsmediumschicht 20a und der auf der Walze 12 zurückbleibenden Schicht 20b Auftragsmediumfäden F (siehe Fig. 2b) - ähnlich einem Honigfaden zwischen einem Löffel und dem in einem Honigglas zurückbleibenden Honig. Beim Abriß dieser Fäden F kann es zur Bildung von Tröpfchen bzw. Partikeln 20c von Auftragsmedium 20 kommen, so daß sich insgesamt ein Auftragsmedium-Sprühnebel N bildet. Gemäß vorstehendem kann man also sagen, daß dieser Sprühnebel N von Partikeln bzw. Tröpfchen 20c des Auftragsmediums 20 gebildet wird, welche durch beispielsweise von der Auftragswalze 12 ausgeübte Adhäsionskräfte wieder aus der aufgetragenen Schicht 20a herausgerissen worden sind.

Durch die vorstehend angesprochene Sprühnebelbildung kann die Qualität der beschichteten Materialbahn in mehrfacher Hinsicht gemindert werden. Beispielsweise können sich in der Auftragsmedium-Oberfläche kleine Krater ausbilden. Darüber hinaus können die Reste der abgerissenen Auftragsmediumfäden F sich auch als sogenannter "Orangenhauteffekt" bemerkbar machen. Weiterhin kann die Wiederablagerung der Tröpfchen bzw. Partikel 20c an einer vom Sprühbereich Sp entfernten Stelle zu einer unregelmäßigen Struktur der beschichteten Materialbahnoberfläche führen. Weitere Nachteile sind in der Verschmutzung der Auftragsvorrichtung durch den Sprühnebel zu sehen.

Das Risiko des Auftretens der vorstehend genannten Nachteile ist umso höher, je höher die Laufgeschwindigkeit der Materialbahn 16 ist, je höher das Flächenauftragsgewicht auf die Materialbahn ist und je geringer die Absorptionsfähigkeit oder/und Saugfähigkeit der Materialbahn 16 ist. Zur Vermeidung der vorstehend angeführten Nachteile des Stands der Technik wurde beispielsweise in dem zusammenfassenden Bericht über das "TAPPI Metered Size Press Forum" von Herrn Dr. Hans W. Maurer (Wochenblatt für Papierfabrikation 17, 1997, Seiten 827 ff.) vorgeschlagen, die Zusammensetzung des Auftragsmediums zu variieren. Dieser Ansatz konnte jedoch im praktischen Einsatz nicht überzeugen.

Es ist daher Aufgabe der Erfindung, eine Auftragsvorrichtung der eingangs genannten Art bereitzustellen, mit welcher der Auftragsmedium-Sprühnebel verhindert bzw. die nachteiligen Auswirkungen des Auftragsmedium-Sprühnebels auf das Auftragsergebnis zumindest gemindert, wenn nicht gar vollständig vermieden werden können, so daß sich ein verglichen mit dem Stand der Technik gleichmäßigerer Auftrag erzielen läßt.

Diese Aufgabe wird bei einer Vorrichtung der gattungsgemäßen Art erfindungsgemäß dadurch gelöst, daß der Auftragsstelle bzw. Rakelstelle benachbart, jedoch in Laufrichtung der Materialbahn hinter der Auftragsstelle bzw. Rakelstelle eine Vorrichtung zum Erzeugen und Zuführen von Dampf, vorzugsweise Wasserdampf, vorgesehen ist.

Der Einfachheit halber wird die Erfindung nachstehend am Beispiel von Wasserdampf erläutert werden, welcher im Bereich der Auftragsstelle eingesetzt wird. Es versteht sich jedoch, daß auch andere Arten von Dämpfen mit Vorteil eingesetzt werden können, und dies nicht nur im Bereich der Auftragsstelle, sondern auch im Bereich einer Rakelstelle, an der die Auftragsschicht mittels einer Rollrakel egalisiert oder/und dosiert wird und wo ebenfalls die Tendenz zur Sprühnebelbildung vorhanden ist.

Erfindungsgemäß wird also dafür gesorgt, daß in dem auf die Auftragsstelle S in Laufrichtung L folgenden Sprühbereich Sp eine Dampfatmosphäre vorliegt, vorzugsweise eine Wasserdampfatmosphäre. Diese Dampfatmosphäre bewirkt zum einen eine Verringerung der Oberflächenspannung des Auftragsmediums, was die Faden- und Tröpfchenbildung im gewünschten Sinne beeinflußt. Zum anderen wird durch die Dampfatmosphäre die Trocknung der auf die Materialbahn aufgebrachten Aufragsmediumschicht sowie der sich eventuell gebildeten Tröpfchen verlangsamt, so daß in der Auftragsmediumschicht durch Fadenabriß bzw. Wiederauftreffen von Tröpfchen hervorgerufene Strukturen ohne weiteres wieder markierungsfrei zerlaufen können. Somit ergibt sich insgesamt ein gleichmäßigerer Auftrag.

Als vorteilhaft hat sich der Einsatz von Wasserdampf erwiesen, der im wesentlichen kein Wasser mehr aufnehmen kann, bespielsweise gesättigtem und überhitztem Wasserdampf.

Unabhängig davon, ob der Dampf erst im Bereich der Auftragsvorrichtung erzeugt wird, oder ob dieser Dampf außerhalb der Auftragsvorrichtung erzeugt und in den Sprühbereich zugeführt wird, ist es bevorzugt, daß die Dampferzeugungs- und -zuführvorrichtung den Dampf in Richtung auf die Auftragsstelle hin abgibt.

Beispielsweise kann die Dampferzeugungs- und -zuführvorrichtung eine Dampfzuführleitung umfassen, welche im Bereich der Auftragsvorrichtung zumindest auf ihrer der Auftragsstelle zugewandten Seite wenigstens eine Dampfaustrittsöffnung aufweist.

Gemäß einer ersten Ausführungsvariante können die vorstehend angegebenen Vorteile der erfindungsgemäßen Lösung mit Hilfe einer im Sprühbereich bis auf die Einflüsse durch die Materialbahnbewegung, durch die Dampfnachführung und einen sich eventuell doch ausbildenden Restsprühnebel im wesentlichen ruhende Dampfatmosphäre erzielt werden.

Gemäß einer alternativen Ausführungsvariante ist es jedoch auch möglich diese Vorteile mit einer bewegten Dampfatmosphäre zu erzielen, bei welcher der Dampf in den Sprühbereich eingeblasen wird und an der Dampferzeugungs- oder/und -zuführvorrichtung vorbei wieder aus dem Sprühbereich abströmt. Hierzu können die Dampfaustrittsöffnung bildende Wandungsabschnitte der Dampfzuführleitung bzw. der Dampfaustrittsöffnung in Dampfströmrichtung nachgeordnete Wandungsabschnitte düsenartig, vorzugsweise sich in Dampfströmungsrichtung verjüngend, ausgebildet sein.

Dabei kann die Bewegung des abströmenden Dampfes durch entsprechende Gestaltung der Außenoberfläche der Dampferzeugungs- oder/und -zuführeinrichtung derart beeinflußt werden, daß sich eine weitere Vergleichmäßigung des Auftrags auf die Materialbahn ergibt. Beispielsweise kann die Dampferzeugungs- und - zuführvorrichtung als Rückdrängeinheit ausgebildet sein, d.h. derart, daß die Dampfatmosphäre, welche aus dem der Auftragsstelle benachbarten Bereich abströmt, dies mit einem Strömungsverlauf oder/und einer Strömungsgeschwindigkeit tut, daß zumindest ein Teil der etwaig im Bereich der Auftragstelle gebildeten Tröpfchen wieder in die Auftragsmediumschicht zurückgedrängt wird. Da sowohl die Tröpfchen als auch die Auftragsschicht in diesem Bereich nicht zuletzt durch den Einfluß der Dampfatmosphäre noch ausreichend feucht sind, können die zurückgedrängten Tröpfchen in der Auftragsschicht ohne weiteres markierungsfrei zerlaufen.

Um einer Verschmutzung der Auftragsvorrichtung durch einen sich trotz Einsatz der erfindungsgemäßen Dampferzeugungs- und -zuführvorrichtung ausbildenden Restsprühnebels vorbeugen zu können, wird in Weiterbildung der Erfindung vorgeschlagen, daß auf der der Auftragsstelle abgewandten Seite der Dampferzeugungs-oder/und-zuführvorrichtung eine Auffangvorrichtung für nicht ordnungsgemäß an die Materialbahn abgegebene Auftragsmediumtröpfchen bzw. -partikel und nicht in der Auftragsschicht verharrende Auftragsmediumtröpfchen bzw. -partikel angeordnet ist.

Zwartrocknen die Tröpfchen des Restsprühnebels aufgrund der Einwirkung durch die Dampfatmosphäre nicht so schnell aus. Um einem "Anbacken" des Auftragsmediums an einer Fangfläche der Auffangvorrichtung vorbeugen zu können, wird vorgeschlagen, daß dieser Fangfläche eine Kühlvorrichtung, beispielsweise in Form von Kühlrippen oder/und einer Kühlschlange oder/und eines Wärmetauschers, zugeordnet ist. Zusätzlich oder alternativ kann dieser Fangfläche auch eine Vorrichtung zum Zuführen von Spülflüssigkeit zugeordnet sein. Das aufgefangene Auftragsmedium oder/und die Spülflüssigkeit können über eine Abführleitung aus der Auffangvorrichtung ausgeleitet werden. Ferner ist es möglich, auf der der Auftragsstelle abgewandten Seite der Dampferzeugungs- oder/und -zuführvorrichtung eine Saugvorrichtung zum Absaugen der Dampfatmosphäre oder/und zum Absaugen von nicht ordnungsgemäß an die Materialbahn abgegebenen Auftragsmediumtröpfchen bzw. -partikeln oder/und nicht in der Auftragsschicht verharrenden Auftragsmediumtröpfchen bzw. -partikeln anzuordnen. Dabei ist es gewünscht, diese Saugvorrichtung und die vorstehend angesprochene Auffangvorrichtung als eine einzige Funktionseinheit auszubilden.

Festzuhalten ist, daß die erfindungsgemäße Dampferzeugungs- und -zuführvorrichtung sowohl bei einer Vorrichtung zum einseitigen Auftrag von Auftragsmedium auf eine Materialbahn eingesetzt werden kann als auch bei einer Vorrichtung zum beidseitigem Auftrag, wobei bei beidseitigem Auftrag auf die Materialbahn vorzugsweise beidseits dieser Materialbahn jeweils eine Dampferzeugungs- und -zuführvorrichtung angeordnet ist.

Um für die nachteiligen Auswirkungen des Filmsplitting-Effekts besonders anfällige Abschnitte der Materialbahn einer intensiveren Dampfbehandlung unterziehen zu können, wird vorgeschlagen, daß eine Mehrzahl von in Querrichtung der Materialbahn aufeinanderfolgend angeordneter Dampferzeugungs- und -zuführabschnitte vorgesehen ist, welche zumindesthinsichtlich der von ihnen pro Zeiteinheit abgegebenen Dampfmenge unabhängig voneinander steuerbar sind.

Die Erfindung betrifft ferner ein Verfahren zum Auftragen eines flüssigen oder pastösem Auftragsmediums auf eine laufende Materialbahn, insbesondere aus Papier oder Karton. Hinsichtlich der mit diesem Auftragsverfahren erzielbaren Vorteile sei auf die vorstehende Diskussion der erfindungsgemäßen Auftragsvorrichtung verwiesen.

Die Erfindung wird im folgendem an Ausführungsbeispielen anhand der beigefügten Zeichnung näher erläutert werden. Es stellt dar:
- Fig. 1a: eine erfindungsgemäße Auftragsvorrichtung zum beidseitigem Auftragen einer Auftragsmediumschicht auf eine Materialbahn, wobei den beiden Auftragsseiten der Materialbahn zwei verschiedene Ausführungsformen erfindungsgemäßer Dampferzeugungs- und -zuführvorrichtungen zugeordnet sind;
- Fig. 1b: eine abgewandelte Ausführungsform der in Fig. 1a links dargestellten Dampferzeugungs- und -zuführvorrichtung; und
- Fig. 2a und 2b: Ansichten einer Auftragsvorrichtung gemäß dem Stand der Technik.

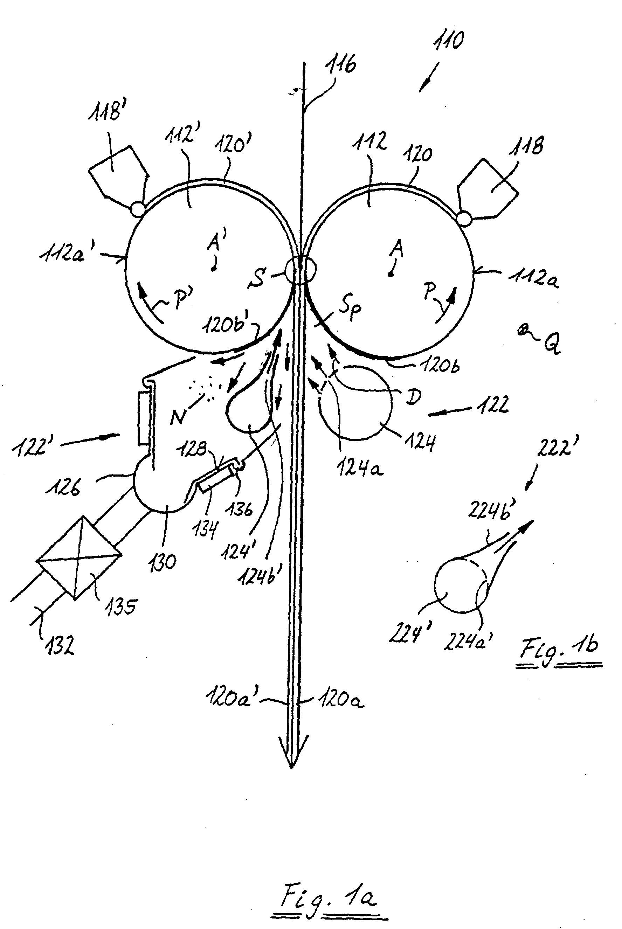

In Fig. 1 ist eine erfindungsgemäße Auftragsvorrichtung allgemein mit 110 bezeichnet. Die Auftragsvorrichtung 110 dient zum indirekten, beidseitigen Auftragen von flüssigem oder pastösem Medium 120 bzw. 120' auf eine sich in Richtung des Pfeils L bewegende Materialbahn 116. Hierzu umfaßt die Auftragsvorrichtung 110 zwei Auftragswalzen 112 und 112', welche mit der Materialbahn 116 im Bereich einer Auftragsstelle S in Kontakt sind, sowie Auftragswerke 118, 118', mittels derer das Auftragsmedium 120 bzw. 120' auf die Oberflächen 112a, 112a' der Auftragswalzen 112, 112' aufgebracht wird. Die Auftragswalzen drehen sich um ihre Achsen A, A' gegensinnig zueinander in Richtung der Pfeile P bzw. P', so daß das auf die Walzenoberfläche jeweils aufgebrachte Auftragsmedium 120 bzw. 120' zur Auftragsstelle S gefördert wird.

Die auf die Materialbahn 116 aufgetragenen Schichten an Auftragsmedien sind in Fig. 1 a mit 120a bzw. 120a' bezeichnet. Die aufgrund des Filmsplitting-Effekts auf den Oberflächen 112a bzw. 112a' der Auftragswalzen 112, 112' verbleibenden Auftragsmediumschichten sind in Fig. 1a mit 120b bzw. 120b' bezeichnet.

In Laufrichtung L der Materialbahn 116 hinter der Auftragsstelle S ist im Sprüh- oder Spritzbereich Sp beidseits der Materialbahn 116 jeweils eine Dampferzeugungs- und -zuführvorrichtung 122 bzw. 122' vorgesehen.

Die in Fig. 1 a rechts dargestellte Dampferzeugungs- und -zuführeinrichtung 122 umfaßt eine in Querrichtung Q der Materialbahn 116 verlaufende Dampfzuführleitung 124, die an ihrer dem Sprühbereich Sp zugewandten Seite eine Mehrzahl von Öffnungen 124a aufweist, aus denen der in der Leitung 124 zugeführte Dampf D ungerichtet in den Sprühbereich Sp austreten kann, was in Fig. 1 a durch drei kleine Pfeile angedeutet ist. Bei dieser Ausführungsform wird über die Dampfzuführleitung 124 in den Sprühbereich Sp nur so viel Dampf nachgeführt, wie in Folge der Bewegung der Materialbahn 116 bzw. der Drehung der Auftragswalze 112 oder aufgrund anderer Effekte aus diesem Sprühbereich Sp entweicht.

Im Gegensatz hierzu wird bei der in Fig. 1 a links dargestellten Dampferzeugungs- und -zuführeinrichtung 122' über die Dampfzuführleitung 124' und den düsenartig ausgebildeten Dampfaustrittsschlitz 124b' Dampf im Überschuß und gerichtet in den Sprühbereich eingeblasen, so daß sich auch bei gedachter, ruhender Materialbahn 116 und Auftragswalze 112' eine Dampfströmung aus dem Sprühbereich Sp heraus ergeben würde, was in Fig. 1 a durch jeweils zwei Pfeile beidseits der Schlitzdüse 124b' angedeutet ist. Darüber hinaus ist die Außenfläche der Dampfzuführleitung 124' bzw. der Schlitzdüse 124b' derart ausgebildet, daß die sich zwischen dieser Oberfläche und der Materialbahn 116 ausbildende Strömung sich etwaig bildende Sprühnebeltröpfchen möglichst umgehend wieder in die Auftragsmediumschicht 120a' zurückdrängt.

In der Ausführung gemäß Fig. 1a sind die Wandungen von Zuführleitung 124' und Schlitzdüse 124b' einstückig ausgebildet. Gemäß der in Fig. 1b dargestellten Alternative kann die Dampferzeugungs- und -zuführvorrichtung 222' jedoch auch einen Schlitzdüsenkörper 224b' umfassen, der auf ein mit Dampfaustrittsöffnungen 224a' versehenes Dampfzuführrohr 224' aufgesetzt und mit diesem verklebt, verlötet, verschweißt oder auf andere Weise dampfaustrittsdicht verbunden ist. Dabei erlaubt die letztgenannte Verbindungsart ein Verschieben und Verdrehen der Düse, sowie ein Verstellen der Spaltweite der Düse.

Um verhindern zu können, daß sich ein möglicherweise doch bildender Restsprühnebel N auf der Auftragsschicht 120a' niederschlägt, ist in Laufrichtung L nach der Auftragsstelle S und insbesondere hinter der Dampferzeugungs- und -zuführeinrichtung 122' eine Auffangvorrichtung 126 vorgesehen. Die Auffangvorrichtung 126 umfaßt eine Fangfläche 128, deren der Materialbahn 116 zugewandtes Ende entgegen der Laufrichtung L auf die Materialbahn 116 zu verläuft, und zwar derart, daß ihr Rand von der Materialbahn einen Abstand von etwa 5 mm bis 50 mm, vorzugsweise etwa 30 mm, aufweist. Am unteren Ende der Auffangvorrichtung 126 ist ein Sammelbehälter 130 vorgesehen, beispielsweise eine Sammelrinne, in welchem sich das von der Fangfläche 128 ablaufende Auftragsmedium 120' sammelt, bevor es durch eine Abflußleitung 132 entweder zu einem Abfallbehälter geleitet und entsorgt wird, oder zur erneuten Verwendung einem Auftragsmedium-Reservoir zugeführt wird. An die Abflußleitung 130 kann zur Unterstützung der Abführwirkung eine Unterdruckquelle 135 angeschlossen sein, welche bei entsprechender Dimensionierung auch als Saugvorrichtung fungieren kann, welche den Restsprühnebel absaugt. Mit Hilfe eines (nicht dargestellten) Separators können die einzelnen abgesaugten Komponenten getrennt und wiederverwendet werden.

Da das Auftragsmedium 120' typischerweise eine Temperatur in der Größenordnung von 30°C bis 60°C aufweist, besteht die Gefahr, daß sich auch die Auffangvorrichtung 126 im Betrieb erwärmt, so daß ferner die Gefahr besteht, daß das auf die Fangwand 128 auftreffende Auftragsmedium 120' eintrocknet und an dieser Fangwand 128 "anbackt". Hierdurch würde sich auf der Fangwand 128 ein Belag bilden, der von Zeit zu Zeit wieder entfernt werden müßte. Um einen im wesentlichen wartungsfreien Betrieb der Auffangvorrichtung zu ermöglichen, sind vorzugsweise an der Außenseite der Fangfläche 128, d.h. auf der der Auftragsstelle S abgewandten Seite dieser Fangfläche, Kühlrippen 134 angeordnet, die den Wärmeaustausch zwischen der Auffangvorrichtung 126 und der diese umgebenden Luft verbessern. In Folge der Kühlwirkung dieser Kühlrippen wird das Eintrocknen des Auftragsmediums 120 nach dessen Auftreffen auf die Fangwand 128 soweit verzögert, daß das Auftragsmedium im wesentlichen rückstandsfrei an der Fangwand 128 abläuft. Zusätzlich kann über eine Leitung 136 Spülflüssigkeit, vorzugsweise Wasser, zur Fangfläche 128 zugeführt werden, welche das auf die Fangfläche 128 auftreffende Auffangmedium 120' abwäscht und zur Auffangrinne 130 spült.

Die Auffangvorrichtung 126 kann in konstruktiv einfacher und kostengünstig herzustellender Weise beispielsweise als Blechkonstruktion ausgebildet sein.

Obgleich die Erfindung vorstehend am Beispiel von Wasserdampf erläutert worden ist, sei an dieser Stelle ausdrücklich darauf hingewiesen, daß jede Art von Fluid eingesetzt werden kann, welches die Oberflächenspannung des Auftragsmediums mindert, schnellem Trocknen des Auftragsmediums vorbeugt oder die Bildung des Auftragsmedium-Sprühnebels verhindert bzw. dessen nachteiligen Auswirkungen auf das Auftragsergebnis vorbeugt. Beispielsweise kann Alkohol als Fluid eingesetzt werden. Darüber hinaus kann der Einfluß des Fluids auf die Sprühnebelbildung durch geeignete Wahl Fluidtemperatur gezielt verändert werden. Je nach Art des Fluids können dabei sowohl hohe als auch tiefe Fluidtemperaturen vorteilhaft sein.

Nachfolgend sollen einige weitere Möglichkeiten der Ausbildung der vorstehend angesprochenen Auffangvorrichtung diskutiert werden:

Kernstück der Auffangvorrichtung kann gemäß einer einfachen Konstruktion eine Fangwand sein. Ein der Materialbahn zugewandtes Ende der Fangwand kann zur Materialbahn hin und entgegen deren Laufrichtung verlaufen. Hierdurch kann die Wucht des Aufpralls der Auftragsmedium-Partikel auf der Fangwand und somit die Gefahr des Wiederabspritzens dieser Partikel von der Fangwand vermindert werden. Zur Erhöhung der Auffangeffektivität ist es selbstverständlich erwünscht, die Auffangvorrichtung so nahe wie möglich an der Materialbahn anzuordnen. Allerdings muß auch ein gewisser Sicherheitsabstand von der Materialbahn eingehalten werden, insbesondere im Hinblick auf das sogenannte Bahnflattern bzw. ein Aufwickeln der Materialbahn um eine sie im Bereich der Auftragsstelle führende Gegenwalze nach einem Riß der Materialbahn. Als guter Kompromiß zwischen diesen einander widerstrebenden Forderungen wird vorgeschlagen, daß das der Materialbahn zugewandte Ende der Fangwand von dieser einen Abstand von zwischen 5 mm und 10 mm hat.

Um verhindern zu können, daß das aufgefangene Auftragsmedium an der Fangwand festtrocknet und diese immer mehr verschmutzt, ist vorgesehen, daß die Fangwand, vorzugsweise an ihrer von der Auftragsstelle weg weisenden Oberfläche, mit Kühlelementen, beispielsweise Kühlrippen, versehen ist. Neben "passiven" Kühlrippen können auch "aktive" Kühlelemente vorgesehen sein, beispielsweise von einem Kühlfluid durchströmte Kühlleitungen. Infolge der Kühlwirkung läuft das aufgefangene Auftragsmedium an der Fangwand im wesentlichen rückstandsfrei nach unten ab, so daß die Auffangvorrichtung über lange Betriebsdauern im wesentlichen wartungsfrei betrieben werden kann.

Die Auffangvorrichtung ist vorzugsweise an ihrem unteren Ende mit einem Sammelbecken für aufgefangene Auftragsmedium-Partikel ausgebildet. Zusätzlich oder alternativ kann die Auffangvorrichtung an ihrem unteren Ende auch mit einem Ablauf versehen sein, so daß das aufgefangene bzw. gesammelte Auftragsmedium ohne weiteres entsorgt werden kann. Zur Unterstützung der Ablaufwirkung kann der Ablauf an eine Unterdruckquelle angeschlossen sein.

Eine unterhalb der Materialbahn angeordnete Auffangvorrichtung kann über die vorteilhaften Auswirkungen auf die Gleichmäßigkeit des Schichtauftrags hinaus auch zur Sauberkeit der gesamten Auftragsvorrichtung beitragen, da mit ihr auch schwerkraftbedingt nach unten wegspritzendes Auftragsmedium aufgefangen werden kann.

Bei beidseitigem Auftrag auf die Materialbahn, insbesondere bei im Bereich der Auftragsstelle im wesentlichen in vertikaler Richtung laufender Materialbahn, kann beidseits der Materialbahn jeweils eine Auffangvorrichtung angeordnet sein.

Die Ausführung der Auffangvorrichtung als Blechkonstruktion zeichnetsich durch niedrige Produktionskosten und einfache Herstellbarkeit aus. Grundsätzlich kann die Auffangvorrichtung aber auch aus Kunststoff oder anderen geeigneten Materialien gefertigt sein.

Ferner kann der Auftragsstelle benachbart, jedoch in Laufrichtung der Materialbahn hinter der Auftragsstelle eine Saugvorrichtung angeordnet sein, welche nach Art eines Staubsaugers nicht ordnungsgemäß an die Materialbahn abgegebene bzw. übertragene Partikel des Auftragsmediums oder/und nicht in der Auftragsschicht verharrende Partikel des Auftragsmediums absaugt. Die Saugvorrichtung kann beispielsweise eine Abführleitung und ein in der Abführleitung angeordnetes Sauggebläse aufweisen, wobei eine Eintrittsöffnung der Abführleitung der Materialbahn benachbart angeordnet ist. Durch die von der Saugvorrichtung erzeugte, zur Eintrittsöffnung hin gerichtete Luftströmung ergibt sich eine hohe Sammeleffizienz für die Auftragsmedium-Partikel des Sprühnebels. Eine besonders hohe Sammeleffizienz ergibt sich dann, wenn der Saugvorrichtung eine Auffangvorrichtung vorgeschaltet ist, wie sie vorstehend erläutert wurde.

Diese vorstehend diskutierten Ausführungsvarianten sollen anhand der nachfolgenden Darstellungen näher erläutert werden:

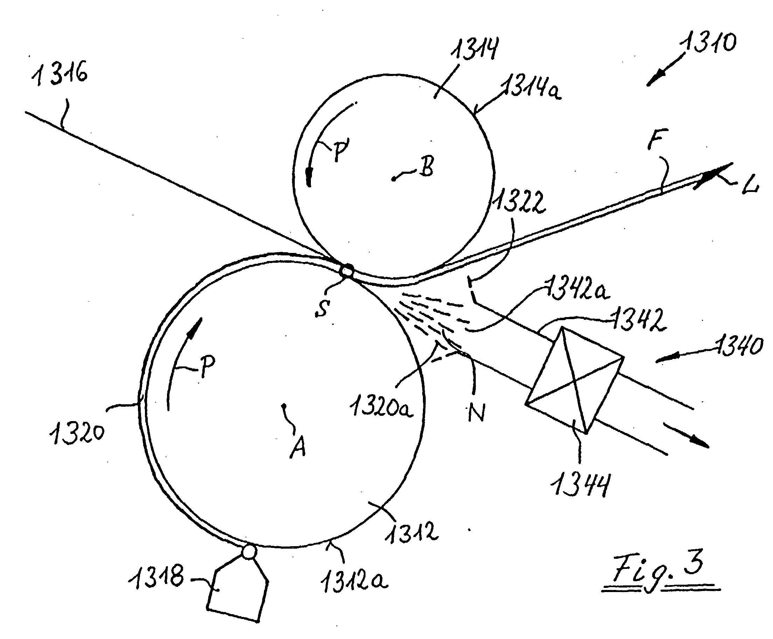

- Figur 3: eine grobschematische Seitenansicht einer Auftragsvorrichtung mit Auffangvorrichtung;

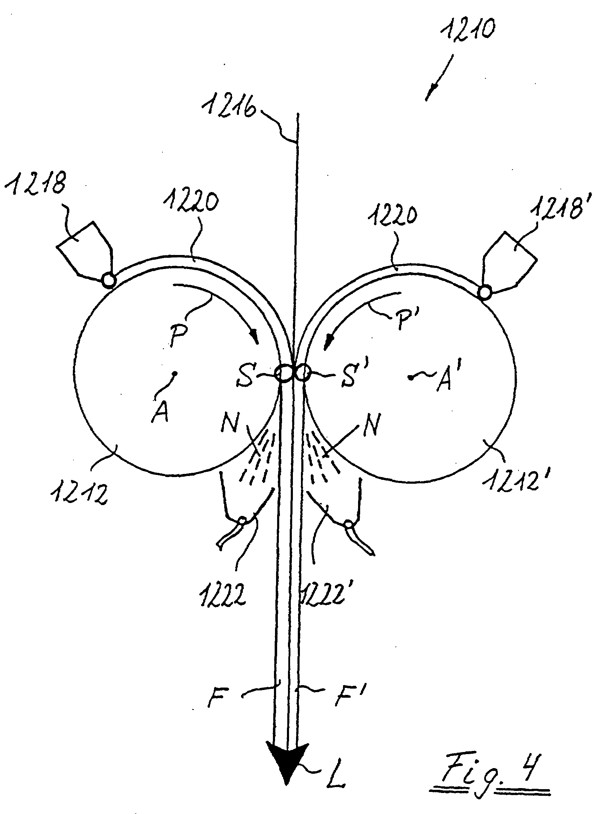

- Figur 4: eine grobschematische Seitenansicht einer Vorrichtung zum beidseitigen Bestreichen einer Materialbahn mit entsprechend beidseitig vorgesehenen Auffangvorrichtungen; und

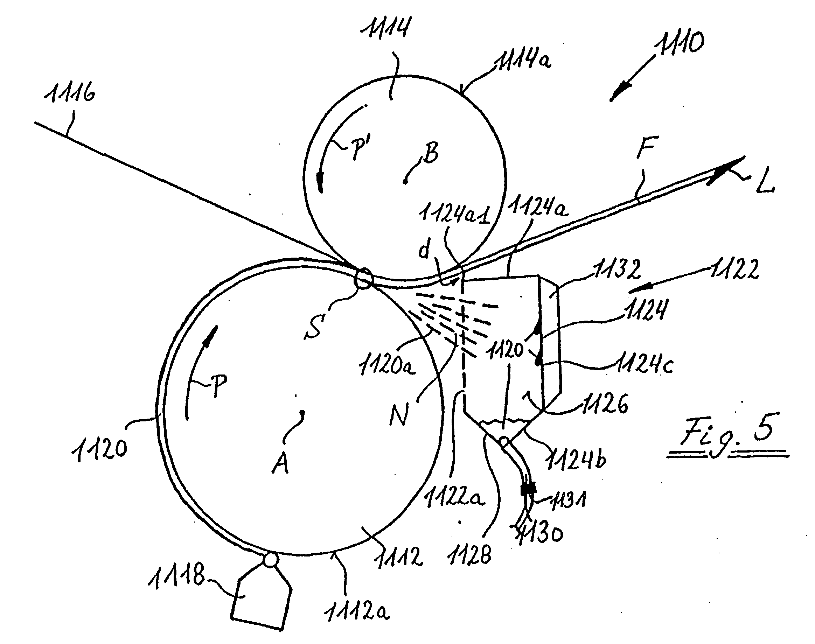

- Figur 5: eine grobschematische Seitenansicht einer Auftragsvorrichtung mit Saugvorrichtung.

In Figur 3 ist eine Auftragsvorrichtung allgemein mit 1110 bezeichnet. Die Auftragsvorrichtung 1110 dient zum indirekten Auftragen eines flüssigen oder pastösen Mediums 1120 auf eine sich in Richtung des Pfeils L bewegende Materialbahn 1116. Hierzu umfaßt die Auftragsvorrichtung 1110 eine Auftragswalze 1112, welche mit der Materialbahn 1116 im Bereich einer Auftragsstelle S in Kontakt ist, sowie ein Auftragswerk 1118, mittels dessen das Auftragsmedium 1120 auf die Oberfläche 1112a der Auftragswalze 1112 aufgebracht wird. Die Auftragswalze dreht sich in Richtung des Pfeils P um ihre Achse A, so daß das auf die Auftragswalzenoberfläche 1112a aufgebrachte Auftragsmedium 1120 vom Auftragswerk 1118 zur Auftragsstelle S gefördert wird.

Die Materialbahn 1116 ist im Bereich der Auftragsstelle S um eine Gegenwalze 1114 herumgeführt, welche gegensinnig zur Auftragswalze 1112, d.h. in Richtung des Pfeils P' um ihre Achse B gedreht wird. Die Walzen 1112 und 1114 sind derart drehangetrieben, daß sich ihre Oberflächen 1112a bzw. 1114a im Bereich des Kontakts mit der Materialbahn 1116 relativ zu dieser schlupf- und rutschfrei bewegen. Die auf die Materialbahn 1116 aufgetragene Schicht an Auftragsmedium ist in Figur 3 mit F bezeichnet.

Insbesondere bei hohen Laufgeschwindigkeiten der Materialbahn 1116 kommt es nach der Auftragsstelle S, insbesondere dort, wo die Materialbahn 1116 von der Oberfläche 1112a der Auftragswalze 1112 abhebt, zur Bildung eines Auftragsmedium-Sprühnebels N. Die diesen Sprühnebel N bildenden Auftragsmedium-Partikel 1120a können sowohl noch flüssige bzw. noch pastöse Tröpfchen von Auftragsmedium 1120 als auch bereits getrocknete Teilchen des Auftragsmediums 1120 sein.

Um verhindern zu können, daß die Auftragsmedium-Partikel 1120a des Sprühnebels N sich wieder auf der Auftragsschicht F niederschlagen, ist in Laufrichtung L nach der Auftragsstelle S eine Auffangvorrichtung 1122 angeordnet. Die Auffangvorrichtung 1122 umfaßt eine Fangwand 1124 mit einem der Materialbahn benachbarten Ende 1124a, einem von der Materialbahn 1116 entfernten Ende 1124b und einer Rückwand 1124c, sowie Seitenwände 1126, von denen in Figur 3 lediglich eine grob schematisch dargestellt ist. Die Auffangvorrichtung 1122 ist als Blechkonstruktion ausgeführt.

In dem Ausführungsbeispiel gemäß Figur 3 ist die Fangwand 1124 derart gebogen und mit den Seitenwandungen 1126 verbunden, daß die Auffangvorrichtung 1122 die Form eines entgegen der Laufrichtung L bei 1122a offenen Kastens aufweist. Die obere Abschlußwandung dieses Auffangkastens 1122, die vom oberen Ende 1124a der Fangwand 1124 gebildet ist, verläuft entgegen der Laufrichtung L auf die Materialbahn 1116 zu, und zwar derart, daß ihr äußerster Rand 1124a1 von der Materialbahn einen Abstand d von etwa 5 bis 110 mm aufweist. Die untere Abschlußwandung des Auffangkastens 1122, die im dargestellten Ausführungsbeispiel vom unteren Ende 1124b der Fangwand 1124 gebildet ist, ist als Sammelbehälter 1128 ausgebildet, in welchem sich das von der Rückwand 1124c ablaufende Auftragsmedium 1120 sammelt, bevor es durch eine Abflußleitung 1130 entweder zu einem Abfallbehälter geleitet und entsorgt wird oder zur erneuten Verwendung einem Auftragsmedium-Reservoir zugeführt wird. An die Abflußleitung 1130 kann zur Unterstützung der Abführwirkung eine Unterdruckquelle 1131 angeschlossen sein.

Da das Auftragsmedium 1120 typischerweise eine Temperatur in der Größenordnung von 50°C bis 60°C aufweist, besteht die Gefahr, daß sich auch der Auffangkasten 1122 im Betrieb der Auftragsvorrichtung 1110 auf diese Temperaturen erwärmt. In diesem Fall würde das im Auftragsmedium 1120 enthaltene Lösungsmittel, beispielsweise Wasser, beim Auftreffen auf die Fangwand 1124 rasch verdampfen, und so das Auftragsmedium 1120 an dieser Fangwand 1124 festtrocknen. Auf der Fangwand 1124 würde sich somit rasch ein Belag bilden, der von Zeit zu Zeit wieder entfernt werden müßte. Um einen im wesentlichen wartungsfreien Betrieb der Auffangvorrichtung 1122 zu ermöglichen, sind vorzugsweise an der Außenseite der Fangwand 1124, d.h. der der Auftragsstelle S abgewandten Seite dieser Fangwand, Kühlrippen 1132 angebracht, die den Wärmeaustausch zwischen der Auftragsvorrichtung 1122 und der diese umgebenden Luft verbessern. Infolge der Kühlwirkung dieser Kühlrippen wird das Verdampfen des Lösungsmittels des Auftragsmediums 1120 nach dessen Auftreffen auf die Fangwand 1124 soweit verzögert, daß das Auftragsmedium im wesentlichen rückstandsfrei an der Fangswand 1124 herunter in den Sammelbehälter 1128 läuft.

Festzuhalten ist, daß das obere Ende 1124a, das untere Ende 1124b und die hintere Wandung 1124c der Fangwand 1124 auch als gesonderte Kastenbauelemente ausgebildet sein können. Ebenso ist es möglich, daß sämtliche Teile des Kastens miteinander einstückig ausgebildet sind. Festzuhalten ist ferner, daß anstelle der Kühlrippen 1132 auch von Kühlfluid durchströmte Kühlleitungen an dem Auffangkasten 1122 angeordnet sein können.

In Figur 4 ist eine Auftragsvorrichtung 1210 zum beidseitigen Auftragen eines Auftragsmediums 1220 auf eine sich in Laufrichtung L bewegende Materialbahn 1216 dargestellt. Die Auftragsvorrichtung 1210 umfaßt zwei Auftragswerke 1218 und 1218' nebst zugeordneten Auftragswalzen 1212 bzw. 1212', die sich um ihre Achsen A bzw. A' gegensinnig drehen (Richtung der Pfeile P bzw. P') und so das Auftragsmedium 1220 von den Auftragswerken 1218, 1218' zur Materialbahn 1216 fördern. In Laufrichtung L hinter den Auftragsstellen S bzw. S' bildet sich beidseits der Materialbahn 1216 ein Sprühnebel N aus. Dieser Sprühnebel N wird von einer Auffangvorrichtung 1222 bzw. 1222' aufgefangen, um zu verhindern, daß er sich auf der auf die Materialbahn aufgebrachten Schicht F bzw. F' niederschlägt und deren Qualität nachteilig beeinflußt. Hinsichtlich des Aufbaus der Auffangvorrichtungen 1222 bzw. 1222' sei auf die Erläuterungen der Auffangvorrichtung 1122 gemäß Figur 3 verwiesen.

In Figur 5 ist eine weitere Ausführungsform einer Auftragsvorrichtung dargestellt. Die Auftragsvorrichtung 1310 umfaßt ein Auftragswerk 1318, welches Auftragsmedium 1320 auf die Oberfläche 1312a einer Auftragswalze 1312 aufträgt. Die Auftragswalze 1312 dreht sich um ihre Achse A in Richtung des Pfeils P, so daß das Auftragsmedium 1320 vom Auftragswerk 1318 zu einer Auftragsstelle S gefördert wird, wo es auf eine sich in Richtung des Pfeils L bewegenden Materialbahn 1316 aufgetragen wird. Die Materialbahn 1316 ist im Bereich der Auftragsstelle um eine Gegenwalze 1314 herumgeführt, welche sich um ihre Achse B gegensinnig zur Auftragswalze 1312, d.h. in Richtung des Pfeils P' dreht.

Um zu verhindern, daß sich der in Laufrichtung L nach der Auftragsstelle S ausbildende Sprühnebel N von Auftragsmedium 1320 auf der auf die Materialbahn 1316 aufgetragenen Schicht F niederschlägt, ist bei der Auftragsvorrichtung 1310 gemäß Figur 5 eine Saugvorrichtung 1340 vorgesehen. Die Saugvorrichtung 1340 umfaßt eine Abführleitung 1342, deren Öffnung 1342a der Auftragsstelle S benachbart und dieser zugewandt angeordnet ist. In der Saugleitung 1342 ist ein Sauggebläse 1344 angeordnet, welches im Bereich der Eintrittsöffnung 1342a einen derartigen Sog erzeugt, daß die Auftragsmedium-Partikel 1320a des Sprühnebels N von der Saugvorrichtung 1340 nach Art eines Staubsaugers eingesogen werden und somit nicht mehr auf die Auftragsschicht F gelangen können.

Wie in Figur 5 gestrichelt angedeutet ist, kann an der Eintrittsöffnung 1342a eine Auffangvorrichtung 1322 angeordnet sein, deren Vorteile anhand des Ausführungsbeispiels gemäß Figur 3 vorstehend erläutert worden sind. Bei entsprechender Sogleistung des Sauggebläses 1344 kann jedoch auf eine derartige Auffangvorrichtung 1322 auch verzichtet werden.

## Patentansprüche

1. Vorrichtung (110) zum Auftragen eines flüssigen oder pastösen Auftragsmediums (120; 120') auf eine laufende Materialbahn (116), insbesondere aus Papier oder Karton,
wobei ein Auftragswerk (118; 118') das Auftragsmedium (120; 120') zunächst auf ein Auftragselement (112; 112'), bspw. eine Auftragswalze, aufbringt, welches das Auftragsmedium (120; 120') dann an einer Auftragsstelle (S) an die Materialbahn (116) als Auftragsschicht (120a; 120a') überträgt, oder in einen zwischen der Materialbahn und einem Begrenzungselement, bspw. einer Begrenzungswalze, gebildeten Auftragssumpf einbringt, in welchem das Auftragsmedium sich als Auftragsschicht auf der Materialbahn niederschlägt,
wobei gewünschtenfalls ferner an einer in Laufrichtung der Materialbahn hinter der Auftragsstelle angeordneten Rakelstelle eine Rollrakeleinrichtung zum Egalisieren oder/und Dosieren der Auftragsschicht angeordnet ist,
**dadurch gekennzeichnet, daß** der Auftragsstelle (S) bzw. der Rakelstelle benachbart, jedoch in Laufrichtung (L) der Materialbahn (116) hinter der Auftragsstelle (S) bzw. der Rakelstelle eine Vorrichtung (122; 122') zum Erzeugen und Zuführen von Dampf, vorzugsweise Wasserdampf, vorgesehen ist.

2. Vorrichtung nach Anspruch 1,
**dadurch gekennzeichnet, daß** die Dampferzeugungs- und -zuführvorrichtung (122; 122') das Dampf in Richtung auf die Auftragsstelle (S) bzw. die Rakelstelle hin abgibt.

3. Vorrichtung nach Anspruch 1 oder 2,
**dadurch gekennzeichnet, daß** die Dampferzeugungs- und -zuführvorrichtung (122; 122') eine Dampfzuführleitung 124; 124') umfaßt, welche im Bereich der Auftragsvorrichtung (110; 110') zumindest auf ihrer der Auftragsstelle (S) bzw. der Rakelstelle zugewandten Seite wenigstens eine Dampfaustrittsöffnung (124a; 124b') aufweist.

4. Vorrichtung nach Anspruch 3,
**dadurch gekennzeichnet, daß** die Dampfaustrittsöffnung (124b') bildende Wandungsabschnitte der Dampfzuführleitung (124') bzw. der Dampfaustrittsöffnung (224a') in Dampfströmrichtung nachgeordnete Wandungsabschnitte (224b') düsenartig, vorzugsweise sich in Dampfströmrichtung verjüngend, ausgebildet sind.

5. Vorrichtung nach einem der Ansprüche 1 bis 4,
**dadurch gekennzeichnet, daß** die Dampferzeugungs- und -zuführvorrichtung (122'; 222') als Rückdrängeinheit ausgebildet ist.

6. Vorrichtung nach einem der Ansprüche 1 bis 5,
**dadurch gekennzeichnet, daß** auf der der Auftragsstelle (S) bzw. der Rakelstelle abgewandten Seite der Dampferzeugungs- und -zuführvorrichtung (122') eine Auffangvorrichtung (126) für nicht ordnungsgemäß an die Materialbahn (116) abgegebene Auftragsmediumtröpfchen bzw. -partikel (N) oder/und nicht in der Auftragsschicht (120a') verharrende Auftragsmediumtröpfchen bzw. -partikel (N) angeordnet ist.

7. Vorrichtung nach Anspruch 6,
**dadurch gekennzeichnet, daß** einer Fangfläche (128) der Auffangvorrichtung (126) eine Kühlvorrichtung (134), beispielsweise in Form von Kühlrippen oder/und einer Kühlschlange oder/und eines Wärmetauschers, zugeordnet ist.

8. Vorrichtung nach Anspruch 6 oder 7,
**dadurch gekennzeichnet, daß** einer Fangfläche (128) der Auffangvorrichtung (126) eine Vorrichtung (136) zum Zuführen von Spülflüssigkeit zugeordnet ist.

9. Vorrichtung nach einem der Ansprüche 1 bis 8,
**dadurch gekennzeichnet, daß** auf der der Auftragsstelle (S) bzw. der Rakelstelle abgewandten Seite der Dampferzeugungs- und -zuführvorrichtung (122') eine Saugvorrichtung (135) zum Absaugen der Dampfatmosphäre oder/und zum Absaugen von nicht ordungsgemäß an die Materialbahn (116) abgegebenen Auftragsmediumtröpfchen bzw. -partikeln (N) oder/und nicht in der Auftragsschicht (120a') verharrenden Auftragsmediumtröpfchen bzw. -partikeln (N) angeordnet ist.

10. Vorrichtung nach einem der Ansprüche 1 bis 9,
**dadurch gekennzeichnet, daß** bei beidseitigem Auftrag auf die Materialbahn (116) beidseits der Materialbahn (116) jeweils eine Dampferzeugungs- und -zuführvorrichtung (122, 122') angeordnet ist.

11. Vorrichtung nach einem der Ansprüche 1 bis 10,
**dadurch gekennzeichnet, daß** eine Mehrzahl von in Querrichtung der Materialbahn (116) aufeinanderfolgend angeordneter Dampferzeugungs- und-zuführabschnitten vorgesehen ist, welche zumindest hinsichtlich der von ihnen pro Zeiteinheit abgegebenen Dampfmenge unabhängig voneinander steuerbar sind.

12. Verfahren zum Auftragen eines flüssigen oder pastösen Auftragsmediums (120; 120') auf eine laufende Materialbahn (116), insbesondere aus Papier oder Karton, unter Verwendung einer Vorrichtung nach einem der Ansprüche 1 bis 11,
bei welchem das Auftragsmedium (120; 120') zunächst mittels eines Auftragswerks (118; 118') auf ein Auftragselement (112; 112'), bspw. eine Auftragswalze, aufgebracht wird, von welchem das Auftragsmedium (120; 120') dann an einer Auftragsstelle (S) an die Materialbahn (116) als Auftragsschicht (120a; 120a') übertragen wird, oder in einen zwischen der Materialbahn und einem Begrenzungselement, bspw. einer Begrenzungswalze, gebildeten Auftragssumpf eingebracht wird, in welchem sich das Auftragsmedium als Auftragsschicht auf der Materialbahn niederschlägt,
wobei die Auftragsschicht gewünschtenfalls an einer in Laufrichtung der Materialbahn hinter der Auftragsstelle angeordneten Rakelstelle egalisiert oder/und dosiert wird,
**dadurch gekennzeichnet, daß** man einem der Auftragsstelle (S) bzw. der Rakelstelle benachbarten, jedoch in Laufrichtung (L) der Materialbahn (116) hinter der Auftragsstelle (S) bzw. der Rakelstelle angeordneten Spritzbereich Dampf, vorzugsweise Wasserdampf, zuführt und in diesem Bereich den Dampf, vorzugsweise den Wasserdampf, erzeugt.

13. Verfahren nach Anspruch 12,
**dadurch gekennzeichnet, daß** Dampf in Richtung auf die Auftragsstelle (S) bzw. die Rakelstelle hin abgegeben wird.

14. Verfahren nach Anspruch 12 oder 13,
**dadurch gekennzeichnet, daß** Dampf über eine Dampfzuführleitung (124; 124') zugeführt wird, welche im Bereich der Auftragsvorrichtung (110) zumindest auf ihrer der Auftragsstelle (S) bzw. der Rakelstelle zugewandten Seite wenigstens eine Dampfaustrittsöffnung (124a; 124a') aufweist.

15. Verfahren nach einem der Ansprüche 12 bis 14,
**dadurch gekennzeichnet, daß** man den Spritz- bzw. Dampfabführungsbereich (Sp) derart ausbildet, daß die Dampfatmosphäre aus diesem Bereich mit einem Strömungsverlauf oder/und einer Strömungsgeschwindigkeit abströmt, daß zumindest ein Teil der etwaig im Bereich der Auftragsstelle (S) bzw. der Rakelstelle gebildeten Auftragsmediumtröpfchen bzw. -partikel (N) in die Auftragsmediumschicht (120a') zurückgedrängt wird.

16. Verfahren nach einem der Ansprüche 12 bis 15,
**dadurch gekennzeichnet, daß** nicht ordungsgemäß an die Materialbahn (116) abgegebene Auftragsmediumtröpfchen bzw. -partikel (N) oder/und nicht in der Auftragsschicht (120a') verharrende Auftragsmediumtröpfchen bzw. -partikel (N) mittels einer Auffangvorrichtung (126) aufgefangen werden.

17. Verfahren nach Anspruch 16,
**dadurch gekennzeichnet, daß** eine Fangfläche (128) der Auffangvorrichtung (126) gekühlt wird.

18. Verfahren nach Anspruch 16 oder 17,
**dadurch gekennzeichnet, daß** eine Fangfläche (128) der Auffangvorrichtung (126) mittels einer Flüssigkeit gespült wird.

19. Verfahren nach einem der Ansprüche 12 bis 18,
**dadurch gekennzeichnet, daß** die Dampfatmosphäre oder/und nicht ordnungsgemäß an die Materialbahn abgegebene Auftragsmediumtröpfchen bzw. -partikel (N) oder/und nicht in der Auftragsschicht (120a') verharrende Auftragsmediumtröpfchen bzw. -partikel (N) mittels einer Saugvorrichtung (135) abgesaugt werden.

20. Verfahren nach einem der Ansprüche 12 bis 19,
**dadurch gekennzeichnet, daß** der Materialbahn (116) in einer Mehrzahl von in Querrichtung (Q) der Materialbahn (116) aufeinanderfolgend angeordneten Abschnitten Dampf zugeführt wird, wobei die von dieser Mehrzahl von Abschnitten pro Zeiteinheit abgegebene Dampfmengen unabhängig voneinander einstellbar sind.

## Claims

1. Apparatus (110) for applying a liquid or pasty application medium (120; 120') to a moving web (116), especially a paper or board web,
an applicator unit (118; 118') firstly applying the application medium to an applicator element (112; 112'), e.g., an applicator roll, which then transfers the application medium (120; 120') at an application point (S) to the material web (116) as an application layer (120a; 120a'), or introduces it into an application pond formed between the material web and a bounding element, e.g. a bounding roll, in which pond the application medium is deposited on the material web as an application layer,
if desired, a doctor-roll device for equalizing and/or metering the application layer additionally being arranged at a doctoring point arranged downstream of the application point in the running direction of the web,
**characterized in that** adjacent to the application point (S) or the doctoring point, but downstream of the application point (S) or the doctoring point in the running direction (L) of the web (116), there is arranged an apparatus (122; 122') for the generation and supply of vapour, preferably water vapour.

2. Apparatus according to Claim 1, **characterized in that** the vapour generating and supplying apparatus (122; 122') outputs the vapour in the direction of the application point (S) or the doctoring point.

3. Apparatus according to Claim 1 or 2, **characterized in that** the vapour generating and supplying apparatus (122; 122') comprises a vapour supply line (124; 124') which, in the area of the application apparatus (110; 110'), has at least one vapour outlet opening (124a; 124b'), at least on its side facing the application point (S) or the doctoring point.

4. Apparatus according to Claim 3, **characterized in that** the wall sections of the vapour supply line (124') that form the vapour outlet opening (124b'), or the wall sections (224b') arranged downstream of the vapour outlet opening (224a') in the vapour flow direction are designed in the manner of nozzles, preferably tapering in the vapour flow direction.

5. Apparatus according to one of Claims 1 to 4,
**characterized in that** the vapour generating and supplying apparatus (122'; 222') is designed as a reverse-displacement unit.

6. Apparatus according to one of Claims 1 to 5,
**characterized in that** on the side of the steam generating and supplying apparatus (122') which faces away from the application point (S) or the doctoring point, there is arranged a collecting apparatus (126) for droplets or particles (N) of application medium which have not been output properly to the web (116), or droplets or particles (N) of application medium which have not remained in the application layer (120a').

7. Apparatus according to Claim 6, **characterized in that** a collecting surface (128) of the collecting apparatus (126) is assigned a cooling apparatus (134), for example in the form of cooling ribs and/or a cooling loop and/or a heat exchanger.

8. Apparatus according to Claim 6 or 7, **characterized in that** a collecting surface (128) of the collecting apparatus (126) is assigned a device (136) for supplying flushing liquid.

9. Apparatus according to one of Claims 1 to 8,
**characterized in that** on the side of the steam generating and supplying apparatus (122') which faces away from the application point (S) or the doctoring point, there is arranged a suction apparatus (135) for extracting the vapour atmosphere and/or for extracting droplets or particles (N) of application medium which have not been output properly to the web (116), or droplets or particles (N) of the application medium which have not remained in the application layer (120a').

10. Apparatus according to one of Claims 1 to 9,
**characterized in that**, in the case of two-sided application to the web (116), in each case a vapour generating and supplying apparatus (122, 122') is arranged on each side of the web (116).

11. Apparatus according to one of Claims 1 to 10,
**characterized in that** a plurality of vapour generating and supplying sections arranged one after another in the transverse direction of the web (116) is provided, the said sections being controllable independently of one another, at least with regard to the quantity of a vapour output by them per unit time.

12. Method of applying a liquid or pasty application medium (120; 120') to a moving web (116), especially a paper or board web, using an apparatus according to one of Claims 1 to 11,
in which the application medium (120; 120') is firstly applied by means of an applicator unit (118; 118') to an applicator element (112; 112'), e.g. an applicator roll, by which the application medium (120; 120') is then transferred at an application point (S) to the web (116) as an application layer (120a; 120a'), or is introduced into an application pond formed between the web and a bounding element, e.g. a bounding roll, in which pond the application medium is deposited on the web as an application layer,
the application layer, if necessary, being equalized and/or metered at a doctoring point arranged downstream of the application point in the running direction of the web,
**characterized in that** vapour, preferably water vapour, is supplied in a spraying area which is adjacent to the application point (S) or the doctoring point but is arranged downstream of the application point (S) or the doctoring point in the running direction (L) of the web (116), and the vapour, preferably the water vapour, is generated in this area.

13. Method according to Claim 12, **characterized in that** vapour is output in the direction of the application point (S) or the doctoring point.

14. Method according to Claim 12 or 13, **characterized in that** vapour is supplied via a vapour supply line (124; 124') which, in the area of the application apparatus (110), has at least one vapour outlet opening (124a; 124a'), at least on its side facing the application point (S) or the doctoring point.

15. Method according to one of Claims 12 to 14, **characterized in that** the spraying or vapour discharge area (Sp) is designed in such a way that the vapour atmosphere flows out of this area with a flow profile and/or a flow speed such that at least some of the droplets or particles (N) of the application medium which may be formed in the area of the application point (S) or the doctoring point are forced back into the application medium layer (120a').

16. Method according to one of Claims 12 to 15, **characterized in that** droplets or particles (N) of application medium which have not been output properly to the web (116), and/or droplets or particles (N) of the application medium which have not remained in the application layer (120a') are collected by means of a collecting apparatus (126).

17. Method according to Claim 16, **characterized in that** a collecting surface (128) of the collecting apparatus (126) is cooled.

18. Method according to Claim 16 or 17, **characterized in that** a collecting surface (128) of the collecting apparatus (126) is flushed by means of a liquid.

19. Method according to one of Claims 12 to 18, **characterized in that** the vapour atmosphere and/or droplets or particles (N) of the application medium which have not been output properly to the web, and/or droplets or particles (N) of the application medium which have not remained in the application layer (120a') are extracted by means of a suction apparatus (135).

20. Method according to one of Claims 12 to 19, **characterized in that** vapour is supplied to the web (116) in a plurality of sections arranged one after another in the transverse direction (Q) of the web (116), the quantities of vapour output by this plurality of sections per unit time being adjustable independently of one another.

## Revendications

1. Dispositif (110) pour l'application d'un milieu d'application liquide ou pâteux (120; 120') sur une bande de matériau en mouvement (116), en particulier en papier ou en carton,
dans lequel un appareil de couchage (118; 118') applique le milieu d'application (120; 120') tout d'abord sur un élément d'application (112; 112'), par exemple un cylindre d'application, qui transfère ensuite le milieu d'application (120; 120') à un poste d'application (S) sur la bande de matériau (116) sous forme de couche d'application (120a; 120a'), ou l'introduit dans un bassin d'application formé entre la bande de matériau et un élément de limitation, par exemple un cylindre de limitation, dans lequel bassin le milieu d'application se dépose sous forme de couche d'application sur la bande de matériau,
dans lequel, si on le souhaite, on dispose en outre au niveau d'un poste de raclage disposé dans la direction d'avance de la bande de matériau derrière le poste d'application un dispositif de raclage au rouleau pour égaliser et/ou doser la couche d'application,
**caractérisé en ce que,** à proximité du poste d'application (S) ou du poste de raclage, mais toutefois dans la direction d'avance (L) de la bande de matériau (116) derrière le poste d'application (S) ou le poste de raclage, il est prévu un dispositif (122; 122') pour produire et acheminer de la vapeur, de préférence de la vapeur d'eau.

2. Dispositif selon la revendication 1, **caractérisé en ce que** le dispositif de production et d'alimentation de vapeur (122; 122') diffuse la vapeur dans la direction du poste d'application (S) ou du poste de raclage.

3. Dispositif selon la revendication 1 ou 2, **caractérisé en ce que** le dispositif de production et d'alimentation de vapeur (122; 122') comprend une conduite d'alimentation de vapeur (124; 124'), qui présente, dans la région du dispositif d'application (110; 110') au moins sur son côté tourné vers le poste d'application (S) ou le poste de raclage, au moins une ouverture de sortie de vapeur (124a; 124b').

4. Dispositif selon la revendication 3, **caractérisé en ce que** les portions de paroi de la conduite d'alimentation de vapeur (124') formant l'ouverture de sortie de vapeur (124b'), ou les portions de paroi (224b') placées après l'ouverture de sortie de vapeur (224a') dans la direction d'écoulement de la vapeur, sont réalisées en forme de buses, de préférence se rétrécissant dans la direction d'écoulement de la vapeur.

5. Dispositif selon l'une quelconque des revendications 1 à 4, **caractérisé en ce que** le dispositif de production et d'alimentation de vapeur (122'; 222') est réalisé en tant qu'unité de refoulement vers l'arrière.

6. Dispositif selon l'une quelconque des revendications 1 à 5, **caractérisé en ce que**, du côté du dispositif de production et d'alimentation de vapeur (122') opposé au poste d'application (S) ou au poste de raclage, est disposé un dispositif de collecte (126) pour les gouttelettes ou particules (N) de milieu d'application diffusées sur la bande de matériau (116) de manière non intentionnelle, et/ou pour les gouttelettes ou particules (N) de milieu d'application n'adhérant pas à la couche d'application (120a').

7. Dispositif selon la revendication 6, **caractérisé en ce qu'**un dispositif de refroidissement (134), par exemple sous la forme de nervures de refroidissement et/ou d'un serpentin de condensation et/ou d'un échangeur de chaleur, est associé à une face de réception (128) du dispositif de collecte (126).

8. Dispositif selon la revendication 6 ou 7, **caractérisé en ce qu'**un dispositif (136) pour l'alimentation en liquide de rinçage est associé à une face de réception (128) du dispositif de collecte (126).

9. Dispositif selon l'une quelconque des revendications 1 à 8, **caractérisé en ce que** du côté du dispositif de production et d'alimentation de vapeur (122') opposé au poste d'application (S) ou au poste de raclage, est disposé un dispositif d'aspiration (135) pour aspirer l'atmosphère de vapeur et/ou pour aspirer les gouttelettes ou particules (N) de milieu d'application diffusées sur la bande de matériau (116) de manière non intentionnelle, et/ou pour les gouttelettes ou particules (N) de milieu d'application n'adhérant pas à la couche d'application (120a').

10. Dispositif selon l'une quelconque des revendications 1 à 9, **caractérisé en ce que**, dans le cas d'une application bilatérale sur la bande de matériau (116), un dispositif de production et d'alimentation de vapeur (122, 122') respectif est disposé sur chaque côté de la bande de matériau (116).

11. Dispositif selon l'une quelconque des revendications 1 à 10, **caractérisé en ce qu'**il est prévu une pluralité de portions de production et d'alimentation de vapeur disposées successivement dans la direction transversale de la bande de matériau (116), lesquelles peuvent être commandées indépendamment les unes des autres au moins en ce qui concerne la quantité de vapeur qu'elles diffusent par unité de temps.

12. Procédé pour l'application d'un milieu d'application liquide ou pâteux (120; 120') sur une bande de matériau en mouvement (116), en particulier en papier ou en carton, utilisant un dispositif selon l'une quelconque des revendications 1 à 11,
dans lequel le milieu d'application (120; 120') est tout d'abord appliqué au moyen d'un appareil de couchage (118; 118') sur un élément d'application (112; 112'), par exemple un cylindre d'application, depuis lequel le milieu d'application (120; 120') est ensuite transféré à un poste d'application (S) sur la bande de matériau (116) sous forme de couche d'application (120a; 120a'), ou bien est introduit dans un bassin d'application formé entre la bande de matériau et un élément de limitation, par exemple un cylindre de limitation, dans lequel bassin le milieu d'application se dépose sur la bande de matériau sous forme de couche d'application,
dans lequel la couche d'application, si on le souhaite, est égalisée et/ou dosée au niveau d'un poste de raclage disposé derrière le poste d'application dans la direction d'avance de la bande de matériau,
**caractérisé en ce que** l'on alimente de la vapeur, de préférence de la vapeur d'eau, à une zone d'injection voisine du poste d'application (S) ou du poste de raclage, mais disposée toutefois derrière le poste d'application (S) ou le poste de raclage dans la direction d'avance (L) de la bande de matériau (116), et que l'on produit dans cette zone la vapeur, de préférence la vapeur d'eau.

13. Procédé selon la revendication 12, **caractérisé en ce que** de la vapeur est diffusée dans la direction du poste d'application (S) ou du poste de raclage.

14. Procédé selon la revendication 12 ou 13, **caractérisé en ce que** de la vapeur est alimentée par le biais d'une conduite d'alimentation de vapeur (124; 124'), laquelle présente, dans la zone du dispositif d'application (110), au moins sur son côté tourné vers le poste d'application (S) ou le poste de raclage, au moins une ouverture de sortie de vapeur (124a; 124a').

15. Procédé selon l'une quelconque des revendications 12 à 14, **caractérisé en ce que** l'on réalise la zone d'injection ou d'évacuation de vapeur (Sp) de telle sorte que l'atmosphère de vapeur jaillit de cette zone avec un profil d'écoulement et/ou une vitesse d'écoulement tels qu'au moins une partie des gouttelettes ou particules (N) de milieu d'application éventuellement formées dans la zone du poste d'application (S) ou du poste de raclage est refoulée vers l'arrière dans la couche de milieu d'application (120a').

16. Procédé selon l'une quelconque des revendications 12 à 15, **caractérisé en ce que** les gouttelettes ou particules (N) de milieu d'application diffusées sur la bande de matériau (116) de manière non intentionnelle, et/ou les gouttelettes ou particules (N) de milieu d'application n'adhérant pas à la couche d'application (120a') sont recueillies au moyen d'un dispositif de collecte (126).

17. Procédé selon la revendication 16, **caractérisé en ce qu'**une face de réception (128) du dispositif de collecte (126) est refroidie.

18. Procédé selon la revendication 16 ou 17, **caractérisé en ce qu'**une face de réception (128) du dispositif de collecte (126) est rincée au moyen d'un liquide.

19. Procédé selon l'une quelconque des revendications 12 à 18, **caractérisé en ce que** l'atmosphère de vapeur et/ou les gouttelettes ou particules (N) de milieu d'application diffusées sur la bande de matériau (116) de manière non intentionnelle, et/ou les gouttelettes ou particules (N) de milieu d'application n'adhérant pas à la couche d'application (120a') sont aspirées au moyen d'un dispositif d'aspiration (135).

20. Procédé selon l'une quelconque des revendications 12 à 19, **caractérisé en ce que** la bande de matériau (116) est alimentée en vapeur dans une pluralité de portions disposées successivement dans la direction transversale (Q) de la bande de matériau (116), les quantités de vapeur diffusées par unité de temps par cette pluralité de portions étant ajustables indépendamment les unes des autres.
